# FASCICULE DE BREVET EUROPEEN

(11) **EP 2 872 878 B1**
(45) Date de publication et mention de la délivrance du brevet: **06.07.2016**
(21) Numéro de dépôt: 13744666.2
(22) Date de dépôt: 28.06.2013
(51) Int. Cl.: B05B 13/06, B05B 15/04, B05B 1/20, G01N 21/91, B05C 7/04, B05B 9/00, B62B 3/08, F01D 21/00, B05B 15/00

(54) **DISPOSITIF DE PULVÉRISATION D'UN PRODUIT DE RESSUAGE SUR UNE PIÈCE**
VORRICHTUNG ZUM VERSPRÜHEN EINES FARBSTOFFEINDRINGUNGSPRÜFPRODUKTS AUF EIN WERKSTÜCK
DEVICE FOR SPRAYING A DYE PENETRANT ONTO A WORKPIECE

(30) Priorité: 12.07.2012 FR 1256745
(43) Date de publication de la demande: 20.05.2015
(73) Titulaire: SNECMA, 75015 Paris (FR)
(72) Inventeur: MILLIOT, Josiane, F-77550 Moissy Cramayel Cedex (FR); CHUCHERKO, Yves, F-77550 Moissy Cramayel Cedex (FR); PHILIPPE, Jean-Michel, F-77550 Moissy Cramayel Cedex (FR)
(74) Mandataire: Pichat, Thierry
(86) Numéro de dépôt international: PCT/FR2013/051530
(87) Numéro de publication internationale: WO 2014/009629

(56) Documents cités:
- EP-A2- 0 093 083
- DE-U1- 9 206 996
- JP-A- 9 229 875
- JP-A- 56 030 634

## Description

La présente invention concerne un dispositif de pulvérisation d'un produit de ressuage sur une pièce, en particulier de turbomachine.

Les documents EP-B1-1 494 060 et WO 2012 117 196 A1 décrivent des dispositifs de recherche et de détection de défauts de pièce par ressuage et endoscopie.

Le ressuage est une technique de contrôle non destructif de l'état de la surface d'une pièce. Cette technique est basée sur le phénomène physique de la capillarité. La pièce à contrôler est recouverte d'un produit très mouillant appelé « pénétrant », qui pénètre dans les défauts éventuels de la pièce et qui est destiné à être ensuite éliminé en surface par lavage de la pièce au moyen d'un émulsifiant et de l'eau. La pièce est mise à l'étuve pour éliminer l'eau puis un révélateur est ensuite appliqué sur la pièce de façon à ce que le produit retenu prisonnier dans les défauts soit visible par examen de la pièce sous éclairage ultraviolet.

Dans la technique actuelle, la phase de lavage de la pièce est réalisée par immersion de la pièce dans des cuves d'émulsifiant et d'eau, respectivement. Cependant, lorsque la pièce à contrôler a des dimensions importantes, comme c'est le cas d'un tambour de turbomachine, les cuves ont de très grandes dimensions. De plus, le poids et l'encombrement de la pièce rendent cette phase relativement complexe et longue, l'efficacité du ressuage dépendant notamment de la maîtrise du temps de lavage.

Un tambour de turbomachine comprend plusieurs disques de rotor qui sont reliés les uns aux autres et qui définissent entre eux des cavités annulaires internes dont les parois doivent être inspectées par ressuage et doivent donc être lavées par l'émulsifiant et l'eau. Cependant, ces cavités sont difficilement accessibles. L'immersion totale de la pièce dans des cuves d'émulsifiant et d'eau permet de contourner ce problème mais demande beaucoup de temps et entraîne une consommation d'émulsifiant et d'eau relativement importante pour remplir les cuves.

Il existe donc un réel besoin d'une technologie capable de traiter une pièce avec un produit de ressuage, tel qu'en particulier une pièce de turbomachine de grande taille, avec de l'émulsifiant et de l'eau, en un temps relativement court, par exemple de l'ordre de deux minutes, et d'une manière répétitive et Le document EP 0 093 083 A2 qui se rapporte à un tout autre domaine technique, divulgue un dispositif comprenant les caractéristiques du préambule de la revendication 1.

La présente invention répond à ce besoin et apporte une solution simple, efficace et économique aux problèmes de la technique antérieure.

Elle propose à cet effet un dispositif de pulvérisation d'au moins un produit, en particulier de ressuage, dans au moins une cavité interne d'une pièce, en particulier de turbomachine, comprenant :
- des moyens de support de la pièce,
- au moins une rampe de distribution du produit, qui est reliée à des moyens d'alimentation en produit et à des moyens de pulvérisation du produit, la rampe étant destinée à être logée au moins en partie dans la pièce lorsqu'elle est en position montée sur les moyens de support de façon à ce que du produit soit pulvérisé dans la ou chaque cavité interne de la pièce,
- au moins une rampe de récupération du produit pulvérisé, qui est destinée à être logée au moins en partie dans la pièce lorsqu'elle est en position montée sur les moyens de support, et qui est reliée à des moyens d'aspiration du produit pulvérisé dans la ou chaque cavité interne de la pièce, et à des moyens d'évacuation du produit aspiré, et
- des moyens de basculement d'au moins une partie des moyens de support depuis une position sensiblement horizontale jusqu'à une position inclinée dans laquelle la pièce est inclinée de sorte que le produit pulvérisé dans la ou chaque cavité s'écoule par gravité jusqu'à au moins une zone où il est aspiré par les moyens d'aspiration.

Dans le dispositif selon l'invention, le ou chaque produit de ressuage est pulvérisé dans la ou chaque cavité de la pièce puis est aspiré de la ou chaque cavité en vue de son évacuation au moyen de rampes qui s'étendent au moins en partie à l'intérieur de la pièce, ce qui permet de ne pas immerger la pièce dans le(s) produit(s) de ressuage. Le produit de ressuage peut être un pénétrant, un émulsifiant, un révélateur, un agent de nettoyage, etc. Les rampes de distribution et de récupération peuvent être utilisées également pour le lavage ou le rinçage à l'eau de la pièce et la récupération de cette eau, respectivement.

L'invention peut s'appliquer au ressuage de toute pièce à cavité interne, et en particulier toute pièce tournante ou présentant une géométrie de révolution d'une turbomachine.

Les rampes peuvent s'étendre parallèlement et à faible distance l'une de l'autre. Dans le cas particulier où la pièce à traiter est un tambour de turbomachine, les rampes peuvent traverser longitudinalement le tambour et s'étendre sensiblement parallèlement à son axe longitudinal ou de révolution. Chaque cavité du tambour peut recevoir du produit de ressuage pulvérisé par deux, trois, voire plus, moyens de pulvérisation indépendants tels que des buses. Les rampes peuvent être sensiblement rectilignes.

La rampe d'aspiration peut porter des tubes souples d'aspiration qui sont espacés les uns des autres et comprennent chacun une extrémité libre destinée à être logée dans une cavité interne de la pièce.

La pièce est destinée à être posée ou montée sur les moyens de support qui comportent au moins une partie déplaçable depuis une position horizontale jusqu'à une position inclinée. Ce déplacement permet de basculer la pièce dans une position inclinée qui permet au produit de ressuage pulvérisé de s'écouler par gravité dans une ou des zones où il est destiné à être aspiré par les moyens d'aspiration.

Dans le cas précité où la pièce à traiter est un tambour, chaque cavité du tambour peut comprendre une zone d'écoulement par gravité du produit de ressuage pulvérisé dans cette cavité, la rampe de récupération pouvant être reliée à des moyens d'aspiration indépendants les uns des autres et destinés chacun à aspirer le produit de ressuage accumulé dans la zone d'une cavité.

La rampe de distribution peut porter au moins deux séries de buses de pulvérisation, les buses de chaque série étant espacées les unes des autres et situées dans un plan sensiblement vertical qui est décalé angulairement du plan de la ou de chaque autre série de buses. Avantageusement, les buses sont du type orientable.

Les moyens de support comportent de préférence des moyens de centrage et de guidage en rotation de la pièce autour d'un axe qui est de préférence un axe de révolution de la pièce. De préférence, la pièce est montée sur les moyens de support de façon à ce que son axe de révolution soit sensiblement vertical.

Les moyens de centrage et de guidage précités peuvent comprendre une première série de rouleaux qui sont chacun libres en rotation autour d'un axe sensiblement perpendiculaire à l'axe de rotation de la pièce, et une deuxième série de rouleaux qui sont chacun libres en rotation autour d'un axe sensiblement parallèle à l'axe de rotation de la pièce.

Les moyens de support peuvent comprendre un plateau de forme sensiblement parallélépipédique, qui est monté sur un châssis et qui est relié à ce châssis par des moyens de pivotement permettant de déplacer en rotation le plateau vis-à-vis du châssis autour d'un axe sensiblement horizontal s'étendant parallèlement à l'un des côtés du plateau.

Le châssis peut comprendre un rebord périphérique sensiblement vertical s'étendant autour d'au moins une partie du plateau.

Les moyens de basculement peuvent comprendre un levier sensiblement en L comportant une première partie sensiblement rectiligne reliée à une deuxième partie sensiblement rectiligne, la première partie portant des moyens de préhension, la zone de jonction entre la première et la deuxième partie étant articulée sur le châssis autour d'un axe sensiblement horizontal, et la deuxième partie portant un doigt qui est engagé et déplaçable dans une fente ou lumière de forme incurvée du rebord périphérique du châssis et qui coopère avec le plateau pour le déplacer en rotation lors du déplacement du doigt dans la fente.

Les moyens de support peuvent être équipés de roulettes pour autoriser le déplacement du dispositif.

Les moyens de support peuvent comprendre une plaque de support d'au moins un réservoir de produit de ressuage, tel qu'un émulsifiant, qui est relié à la rampe de distribution, et d'une pompe reliée à la rampe de récupération.

La rampe de distribution peut être reliée par une vanne trois voies au réservoir de produit de ressuage et à des moyens d'alimentation en eau tels qu'un réseau de distribution d'eau. Dans ce cas, la rampe de distribution permet d'alimenter les moyens de pulvérisation à la fois en produit de ressuage et en eau.

La présente invention concerne également un procédé de pulvérisation d'au moins un produit, en particulier de ressuage, dans au moins une cavité interne d'une pièce, en particulier de turbomachine, au moyen du dispositif tel que décrit précédemment, caractérisé en ce qu'il comprend les étapes consistant à :
a) monter la pièce sur les moyens de support de sorte que le ou l'un des axes de révolution de la pièce s'étende sensiblement verticalement,
b) incliner la pièce par l'intermédiaire des moyens de basculement,
c) mettre la pièce en rotation autour de l'axe de révolution précité,
d) pulvériser un produit, tel qu'un émulsifiant, dans la ou chaque cavité interne de la pièce et aspirer le produit pulvérisé du ou de chaque cavité.

Le procédé peut comprendre, après l'étape d), une étape de pulvérisation d'eau dans au moins une cavité interne de la pièce, et d'aspiration de l'eau pulvérisée de la ou de chaque cavité.

La pièce est par exemple un tambour de turbomachine. La pièce peut être mise en rotation de manière automatisée ou par un opérateur par l'intermédiaire de moyens manuels ou motorisés.

La durée de pulvérisation du produit et/ou de l'eau est de préférence prédéterminée. Le temps de traitement de la pièce est dans ce cas maîtrisé.

L'invention sera mieux comprise et d'autres caractéristiques, détails et avantages de celle-ci apparaîtront plus clairement à la lecture de la description qui suit, faite à titre d'exemple non limitatif et en référence aux dessins annexés dans lesquels :
- la figure 1 est une vue très schématique partielle en coupe d'une pièce en cours de traitement par un procédé de ressuage, et représente cette pièce lors de plusieurs étapes successives de ce procédé ;
- les figures 2 et 3 sont des vues schématiques en perspective d'un dispositif selon l'invention de pulvérisation d'au moins un produit de ressuage dans au moins une cavité interne d'une pièce ;
- les figures 4 et 5 sont des vues schématiques en perspective du dispositif des figures 2 et 3, sur lequel est montée une pièce à traiter par ressuage, cette pièce étant un tambour de turbomachine représenté en coupe axiale et en perspective ;
- la figure 6 est une vue schématique en perspective du châssis des moyens de support du dispositif représenté aux figures 2 et 3 ;
- la figure 7 est une vue schématique en perspective du plateau des moyens de support du dispositif représenté aux figures 2 et 3 ;
- la figure 8 est une vue schématique en perspective du levier des moyens de basculement du dispositif représenté aux figures 2 et 3 ;
- la figure 9 est une vue schématique en perspective de la rampe de pulvérisation du dispositif représenté aux figures 2 et 3 ;
- la figure 10 est une vue schématique de dessus de la rampe de distribution de la figure 9 ;
- la figure 11 est une vue schématique en perspective de la rampe de récupération du dispositif représenté aux figures 2 et 3 ; et
- la figure 12 est une vue très schématique des circuits de fluides du dispositif représenté aux figures 2 et 3.

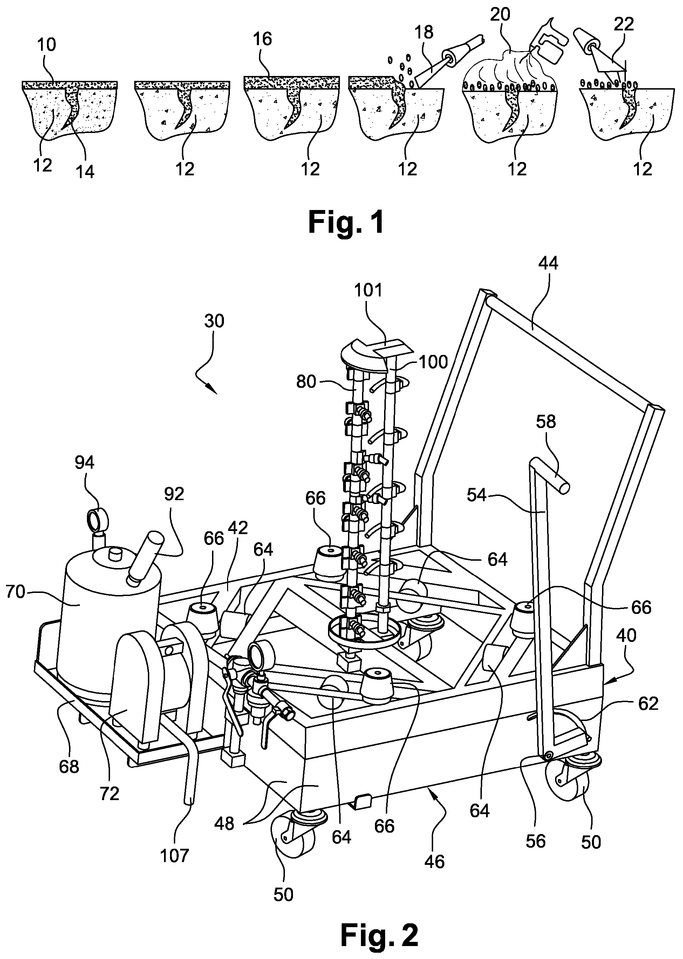

On se réfère d'abord à la figure 1 qui représente de manière schématique des étapes d'un procédé de ressuage appliqué à une pièce en vue du contrôle de l'état de sa surface.

La pièce, par exemple de turbomachine, peut comprendre des défauts de surface, tels que des fissures, qui sont visibles sous éclairage ultraviolet après ressuage.

Le procédé de ressuage comprend une première étape dans laquelle un « pénétrant » 10 est appliqué sur la surface de la pièce 12 à contrôler. Ce pénétrant 10 a un fort pouvoir mouillant et pénètre dans les défauts de surface de la pièce 12, tels qu'une fissure 14 comme cela est représenté dans le premier dessin à gauche de la figure 1. La surface de la pièce est ensuite soumise à un prélavage pour enlever le surplus de pénétrant (deuxième dessin de la figure 1).

Un émulsifiant 16 est alors appliqué sur la surface de la pièce 12 qui est ensuite lavée à l'eau 18, cette phase permettant de nettoyer la surface de la pièce et de retirer le pénétrant qui est resté sur cette surface (troisième et quatrième dessins de la figure 1). Après cette phase, seuls les défauts de surface de la pièce sont remplis de pénétrant. Dans la technique actuelle, les opérations de lavage de la pièce par un émulsifiant et de l'eau sont réalisées par immersion de la pièce dans des cuves remplies de ces produits.

Cette phase de lavage est suivie d'une mise à l'étuve de la pièce pour éliminer l'eau par évaporation.

Un révélateur 20 est ensuite appliqué sur la surface de la pièce, de façon à rendre le pénétrant visible sous éclairage ultraviolet 22 (cinquième et sixième dessins de la figure 1).

Le dispositif selon l'invention décrit dans ce qui suit est en particulier mais non exclusivement adapté pour réaliser la phase précitée de lavage d'une pièce par un émulsifiant et de l'eau dans un temps maîtrisé.

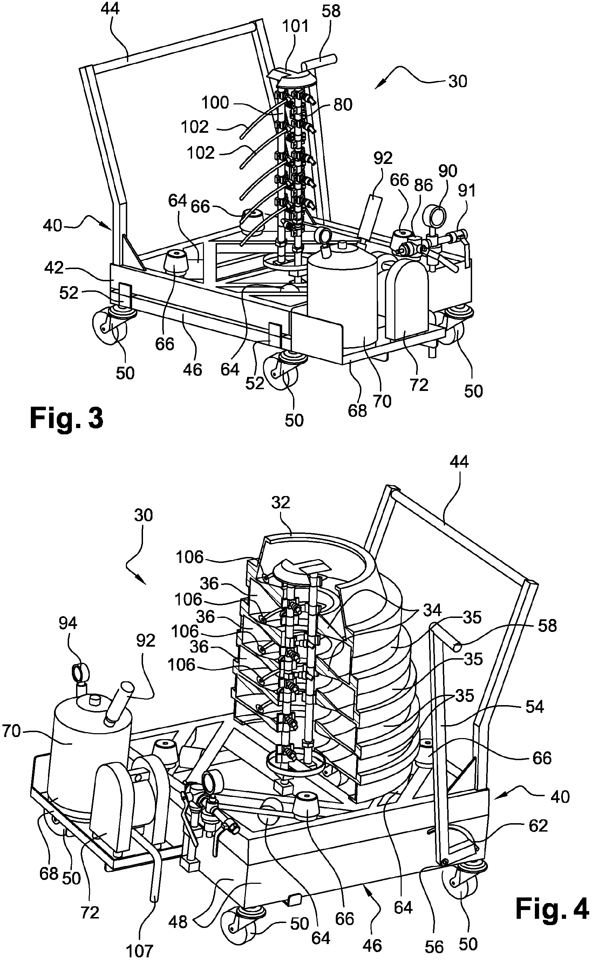

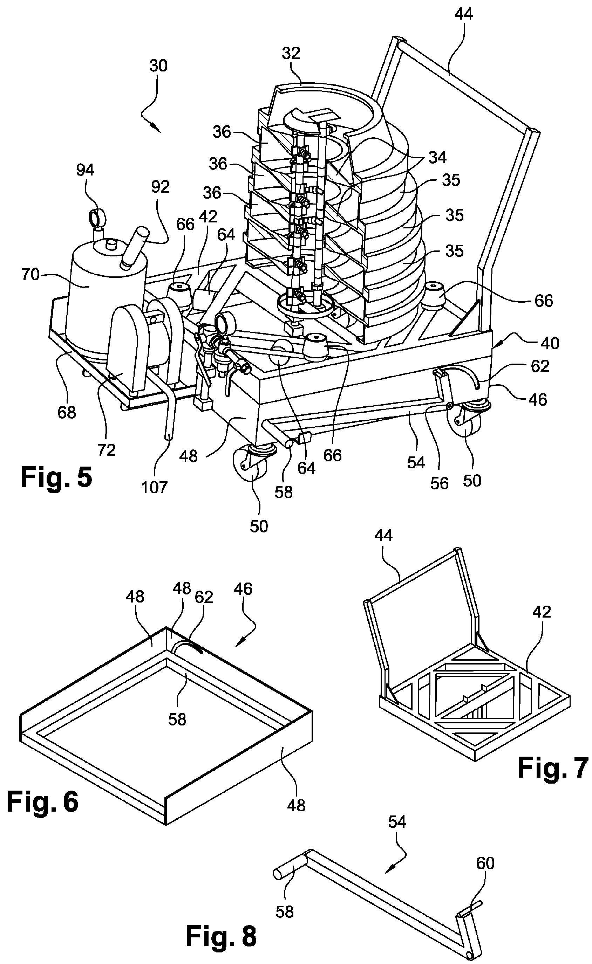

Les figures 2 et 3 représentent un exemple de réalisation du dispositif 30 selon l'invention, une pièce à contrôler étant montée sur ce dispositif aux figures 4 et 5, cette pièce étant ici un tambour 32 de turbomachine.

Le tambour 32 comprend plusieurs disques de rotor 34 coaxiaux qui sont reliés les uns aux autres par des parois cylindriques 35 et qui définissent entre eux des cavités annulaires internes 36 dont les parois (c'est-à-dire les surfaces latérales des disques 34 et les surfaces radialement internes des parois cylindriques 35) doivent être inspectées pour vérifier l'état de leur surface. Le dispositif 30 est ici destiné à pulvériser de l'émulsifiant et de l'eau à l'intérieur de chaque cavité interne 36 du tambour.

Le dispositif 30 selon l'invention comprend les éléments suivants :
- des moyens 40 de support du tambour 32, et des moyens de basculement d'au moins une partie des moyens de support 40 de façon à pouvoir incliner le tambour 32,
- des moyens 80 de distribution et de pulvérisation de l'émulsifiant et de l'eau, successivement, dans les cavités internes 36 du tambour 32, et
- des moyens 100 d'aspiration et d'évacuation de l'émulsifiant et de l'eau pulvérisés dans les cavités internes 36.

Les moyens de support 40 forment un chariot dans l'exemple représenté. Ils comprennent un plateau 42 de support du tambour 32 qui a une forme parallélépipédique et dont un des côtés est relié à une barre horizontale 44 de manipulation et de déplacement des moyens de support (figure 7). Le plateau 42 est monté sur un châssis 46 (figure 6) de forme également parallélépipédique, qui comprend un rebord périphérique vertical 48 qui s'étend le long de trois côtés du châssis et autour de trois côtés correspondants du plateau 42 lorsque celui-ci est en appui sur le châssis, comme c'est le cas en figure 2.

Des roulettes 50 sont fixées aux quatre coins du châssis 46 pour autoriser le déplacement des moyens de support, ces déplacements étant réalisés par un opérateur au moyen de la barre horizontale 44 précitée.

Le plateau 42 est monté pivotant sur le châssis 46 et est déplaçable depuis une position horizontale, dans laquelle le plateau et le châssis sont sensiblement horizontaux et parallèles (figures 2 à 4), jusqu'à une position inclinée, dans laquelle le châssis reste sensiblement horizontal et le plateau adopte une position inclinée, par exemple de l'ordre de 10-20° par rapport au châssis (figure 5).

Dans l'exemple représenté, le plateau 42 est monté pivotant sur le châssis 46 au moyen de charnières 52 qui relient l'un des côtés du plateau au côté correspondant du châssis, qui est ici le côté du châssis qui ne comporte pas de rebord périphérique vertical 48 (figure 3). Les charnières définissent un axe de pivotement du plateau sensiblement horizontal.

Le pivotement du plateau 42 est réalisé par un opérateur au moyen d'un levier de basculement 54 qui est représenté en figure 8.

Ce levier 54 a une forme générale en L et comprend deux parties rectilignes reliées entre elles par une de leurs extrémités. La zone de jonction entre ces parties rectilignes est articulée sur un axe 56 sensiblement horizontal porté par le châssis 46 (figures 2, 4 et 5). Dans l'exemple représenté, le châssis 46 comprend un orifice 58 de montage de cet axe, qui est situé sur le côté du châssis opposé à celui portant les charnières 52 de pivotement du plateau 42.

Le levier 54 est mobile en rotation autour de l'axe 56 entre une position représentée en figure 5, et une position représentée aux figures 2 et 4.

La partie de plus grande longueur du levier 54 comprend à son extrémité libre (c'est-à-dire celle opposée à l'axe 56) une poignée 58, et la partie de plus petite longueur du levier comprend à son extrémité libre (opposée à l'axe 56) un doigt 60. Ce doigt 60 est engagé et déplaçable dans une fente traversante 62 de forme incurvée du rebord vertical 48 du châssis. Le plateau 42 prend appui sur ce doigt 60, qui est déplacé dans la fente 62 du châssis pour pivoter le plateau autour de l'axe défini par les charnières 52.

Dans la position du levier 54 représentée aux figures 2 à 4 où la partie de plus grande longueur du levier est sensiblement verticale, le doigt 60 est situé à une extrémité « basse » de la fente 62 et est intercalé entre le châssis et le plateau 42, ce dernier étant sensiblement horizontal c'est-à-dire dans sa position non inclinée. Dans la position du levier 54 représentée à la figure 5 où la partie de plus grande longueur du levier est sensiblement horizontale, le doigt est situé à une extrémité « haute » de la fente 62 et supporte le plateau dans sa position inclinée.

Le déplacement du levier autour de l'axe 56 (d'environ 90°) entraîne donc le déplacement du doigt 60 dans la fente 62 du châssis 46 et provoque le pivotement du plateau 42 autour de l'axe défini par les charnières 52 (d'environ 10 à 20°).

Les moyens de support 40 comportent également des moyens de centrage et de guidage en rotation du tambour 32 autour de son axe longitudinal ou de révolution. Dans l'exemple représenté, ces moyens comprennent des galets ou rouleaux 64, 66 portés par le plateau 42. Le plateau 42 comprend des premiers rouleaux, au nombre de quatre dans l'exemple représenté, qui sont régulièrement répartis sur une circonférence centrée sur l'axe de révolution du tambour, deux de ces rouleaux étant montés libres en rotation autour d'un premier axe sensiblement horizontal et les deux autres rouleaux étant montés libres en rotation autour d'un autre axe sensiblement horizontal et perpendiculaire au premier axe. Le tambour 32 est destiné à être en appui vertical sur ces rouleaux 64 qui tournent autour de leurs axes lorsque le tambour est déplacé en rotation vis-à-vis du plateau.

Le plateau 42 comprend des seconds rouleaux, au nombre de quatre dans l'exemple représenté, qui sont chacun montés libres en rotation autour d'axes sensiblement verticaux qui sont régulièrement répartis sur une circonférence centrée sur l'axe de révolution du tambour. Le tambour est destiné à être en appui latéral sur ces rouleaux qui tournent autour de leurs axes lorsque le tambour est déplacé en rotation vis-à-vis du plateau.

Les moyens de support 40 comportent en outre une plaque 68 de support d'un récipient 70 d'émulsifiant et d'une pompe 72, cette plaque étant portée par le châssis 46 au niveau de son côté opposé à celui du plateau 42 relié à la barre horizontale 44. Le récipient 70 contient par exemple un volume d'émulsifiant de l'ordre de 10L, qui est suffisant pour traiter un tambour de turbomachine.

Le dispositif selon l'invention comprend deux rampes 80, 100 qui sont utilisées respectivement pour la distribution et la pulvérisation de l'émulsifiant et de l'eau dans les cavités internes du tambour, et la récupération par aspiration et l'évacuation de l'émulsifiant et de l'eau injectés dans ces cavités internes.

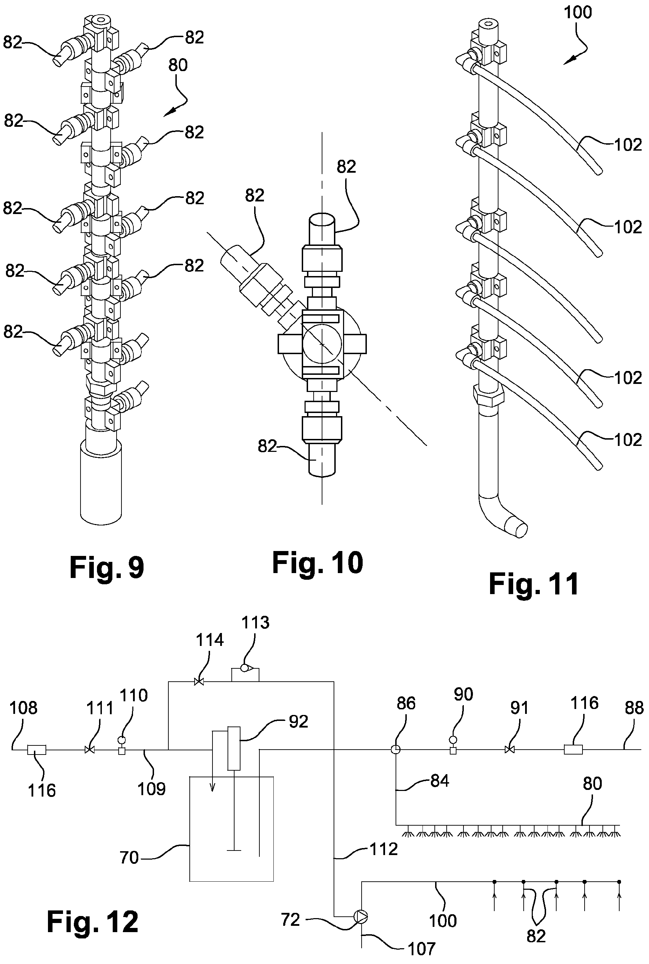

La rampe de distribution 80, mieux visible en figure 9, est sensiblement rectiligne et comprend une extrémité fixée au plateau sensiblement en son milieu. La rampe 80 est sensiblement verticale, elle traverse longitudinalement le tambour 32 et est sensiblement parallèle à l'axe longitudinal de ce tambour.

La rampe 80 porte plusieurs buses de pulvérisation 82. Dans l'exemple représenté, la rampe 80 porte trois séries de buses 82, chaque série comportant cinq ou six buses. Les buses 82 de chaque série sont espacées et alignées les unes derrière les autres dans un plan sensiblement vertical, qui est décalé angulairement des plans des autres séries de buses. Comme cela est schématiquement représenté en figure 10, deux séries de buses 82 s'étendent dans des plans diamétralement opposés par rapport à l'axe de la rampe 80, la troisième série de buses étant située dans un plan décalé d'environ 45° de l'un des plans précités.

Comme cela est visible à la figure 9, certaines buses 82 ont leurs orifices de sortie qui débouchent vers le bas et d'autres vers le haut de façon à ce que les produits soient pulvérisés sur la totalité des surfaces des cavités internes du tambour. Le tambour 32 comprend ici six cavités internes 36, chaque cavité interne recevant les produits pulvérisés par deux ou trois buses 82. La pression de sortie du produit en sortie des buses est par exemple de l'ordre de deux bars.

Comme cela est schématiquement représenté en figure 12, l'extrémité inférieure de la rampe de distribution 80 est reliée par un conduit 84 à la sortie d'une vanne trois voies 86 dont une première entrée est reliée au récipient 70 précité d'émulsifiant, et dont la deuxième entrée est reliée à un réseau 88 d'eau. Le conduit de liaison de la vanne trois voies au réseau d'eau peut être équipé d'un manomètre 90 et d'une vanne d'arrêt 91. Le récipient 70 d'émulsifiant est équipé de moyens 92 d'agitation de son contenu et éventuellement d'un manomètre 94.

La rampe de récupération 100, mieux visible en figure 11, est sensiblement rectiligne et verticale, son extrémité inférieure étant fixée au plateau 42 sensiblement en son milieu. La rampe 100 traverse longitudinalement le tambour 32 et est sensiblement parallèle et à faible distance de l'autre rampe 80.

La rampe 100 porte plusieurs tubes d'aspiration 102, au nombre de cinq dans l'exemple représenté. Ces tubes 102 sont régulièrement espacés les uns des autres. Ils sont réalisés en matériau plastique flexible et ont une extrémité reliée à la rampe 100 et une extrémité opposée libre qui est destinée à être logée au fond d'une cavité 36 du tambour 32 en vue de l'aspiration des produits injectés dans cette cavité.

Dans l'exemple représenté, le tambour 32 est incliné de façon à ce que la zone la plus basse de chaque cavité interne du tambour soit située sur une face latérale de l'un des disques définissant cette cavité. Les extrémités libres des tubes d'aspiration 102 sont situées dans ces zones 106, qui sont schématiquement représentées par des cercles en figure 4.

Lorsque le tambour 32 est en cours de traitement, l'émulsifiant ou l'eau pulvérisé dans les cavités s'écoule par gravité le long des surfaces internes des cavités 36 jusqu'aux zones précitées ou il/elle est aspiré(e) par les tubes.

Comme cela est schématiquement représenté en figure 12, l'extrémité inférieure de la rampe de récupération 100 est reliée par un conduit à la pompe 72 précitée dont la sortie 107 sert à l'évacuation. Le récipient 70 est relié à un réseau 108 d'alimentation en air par un conduit 109 équipé d'un manomètre 110 et d'une vanne d'arrêt 111. La pompe 72 est reliée à ce conduit 109 par un autre conduit 112 équipé d'un régulateur de débit 113 et d'une vanne d'isolement 114. Les références 116 de la figure 12 désignent des raccords rapides.

Les extrémités supérieures des rampes 80, 100 sont fixées à un élément 101 de centrage et de guidage du tambour 32 lors de son montage sur le dispositif. Dans l'exemple représenté, cet élément 101 comprend des portions de bord périphérique de forme incurvée convexe qui sont sensiblement complémentaires des bords périphériques internes des disques 34 du tambour. Lors du montage du tambour sur le dispositif, le tambour est positionné au dessus des rampes 80, 100 et est déplacé verticalement vers le bas de façon à ce que les rampes traversent longitudinalement le tambour. Pendant cette traversée, l'élément 101 coopère avec les bords périphériques internes des disques 34 pour guider et centrer le tambour 32. Après montage du tambour, cet élément 101 peut être coiffé d'un couvercle (non représenté) destiné à obturer la cavité interne 36 supérieure du tambour et ainsi éviter des projections d'émulsifiant et d'eau à l'extérieur du tambour lors de son traitement.

Le dispositif 30 selon l'invention peut être utilisé de la façon suivante.

Le plateau 42 est disposé horizontalement, c'est-à-dire que le levier 54 est en position représentée aux figures 2 à 4. Le tambour 32 est monté sur le plateau 42. Comme indiqué dans ce qui précède, le tambour 32 est positionné au dessus du dispositif puis est déplacé en translation vers le bas jusqu'à ce que les rampes 80, 100 traversent longitudinalement le tambour et que le tambour prenne appui sur les rouleaux 64 du plateau. Le levier 54 est ensuite déplacé depuis sa position représentée aux figures 2 à 4 jusqu'à la position représentée à la figure 5 de façon à ce que le plateau 42 soit incliné. Dans cette position, le tambour 32 est incliné et les rampes qui s'étendent parallèlement à l'axe du tambour et qui sont solidaires du plateau sont également inclinées. De l'émulsifiant est pulvérisé dans les cavités internes du tambour 32 grâce à la rampe de distribution 80 et aux buses de pulvérisation 82, cet émulsifiant s'écoulant par gravité le long des surfaces internes des cavités jusqu'aux zones 106 où il est aspiré et récupéré par la rampe 100. Pendant cette opération, le tambour 32 est mis en rotation par des moyens manuels ou motorisés par un opérateur de façon à ce que de l'émulsifiant puisse être pulvérisé sur toutes les surfaces des cavités internes. Elle dure environ 1 minute. L'émulsifiant utilisé est par exemple du produit ER83 A (commercialisé par la société SHERWIN) dilué à 5% dans de l'eau. Il suffit ensuite de commander la vanne 86 pour alimenter la rampe 80 en eau, ce qui peut être fait rapidement.

De l'eau est ensuite pulvérisée dans les cavités internes du tambour grâce à la rampe de distribution 80 et aux buses de pulvérisation 82. Cette eau s'écoule par gravité jusqu'aux zones 106 où elle est aspirée et récupérée par la rampe 100. Pendant cette opération, le tambour 32 est aussi mis en rotation par des moyens manuels ou motorisés par un opérateur de façon à ce que de toutes les surfaces des cavités internes puissent être rincées à l'eau. Elle dure environ 1 minute de sorte que la durée totale du procédé de pulvérisation du tambour est de l'ordre de 2 minutes environ, dans cet exemple particulier de réalisation de l'invention.

Dans une variante non représentée, les rampes pourraient être déplaçables vis-à-vis du plateau de façon à optimiser leurs positions par rapport à la pièce à traiter, pour le traitement de pièces de différentes tailles. Ce déplacement pourrait être assuré manuellement ou à l'aide d'un moteur.

Dans encore une autre variante non représentée, le dispositif pourrait comprendre une autre rampe de distribution qui serait équipée de buses de pulvérisation et qui s'étendrait à l'extérieur de la pièce pour pulvériser du produit sur la surface externe de la pièce simultanément au traitement de ses cavités internes.

## Revendications

1. Dispositif (30) de pulvérisation d'au moins un produit, en particulier de ressuage, dans au moins une cavité interne (36) d'une pièce (32), en particulier de turbomachine, comprenant :
- des moyens (40) de support de la pièce,
- au moins une rampe (80) de distribution du produit, qui est reliée à des moyens (70) d'alimentation en produit et à des moyens (82) de pulvérisation du produit, la rampe étant au moins en partie destinée à être logée dans la pièce lorsqu'elle est en position montée sur les moyens de support de façon à ce que du produit soit pulvérisé dans la ou chaque cavité interne de la pièce et
- au moins une rampe (100) de récupération du produit pulvérisé, qui est destinée à être logée au moins en partie dans la pièce lorsqu'elle est en position montée sur les moyens de support, et qui est reliée à des moyens (102) d'aspiration du produit pulvérisé dans la ou chaque cavité interne de la pièce, et à des moyens (72) d'évacuation du produit aspiré, le dispositif étant caractérisé en qu'il comprend en outre
- des moyens (54) de basculement d'au moins une partie des moyens de support depuis une position sensiblement horizontale jusqu'à une position inclinée dans laquelle la pièce est destinée à être inclinée de sorte que le produit pulvérisé dans la ou chaque cavité s'écoule par gravité jusqu'à au moins une zone (106) où il est aspiré par les moyens d'aspiration.

2. Dispositif selon la revendication 1, **caractérisé en ce que** les moyens de support (40) comportant des moyens (64, 66) de centrage et de guidage en rotation de la pièce (32) autour d'un axe qui est de préférence un axe de révolution de la pièce.

3. Dispositif selon la revendication 2, **caractérisé en ce que** les moyens de centrage et de guidage comprennent une première série de rouleaux (64) qui sont chacun libres en rotation autour d'un axe sensiblement perpendiculaire à l'axe de rotation de la pièce, et une deuxième série de rouleaux (66) qui sont chacun libres en rotation autour d'un axe sensiblement parallèle à l'axe de rotation de la pièce.

4. Dispositif selon l'une des revendications précédentes, **caractérisé en ce que** les moyens de support (40) comprennent un plateau (42) de forme sensiblement parallélépipédique, qui est monté sur un châssis (46) et qui est relié à ce châssis par des moyens de pivotement (52) permettant de déplacer en rotation le plateau vis-à-vis du châssis autour d'un axe sensiblement horizontal s'étendant parallèlement à l'un des côtés du plateau.

5. Dispositif selon la revendication 4, **caractérisé en ce que** le châssis (46) comprend un rebord périphérique (48) sensiblement vertical s'étendant autour d'au moins une partie du plateau (42).

6. Dispositif selon la revendication 5, **caractérisé en ce que** les moyens de basculement comprennent un levier (54) sensiblement en L comportant une première partie sensiblement rectiligne reliée à une deuxième partie sensiblement rectiligne, la première partie portant des moyens de préhension (58), la zone de jonction entre la première et la deuxième partie étant articulée sur le châssis (46) autour d'un axe (56) sensiblement horizontal, et la deuxième partie portant un doigt (60) qui est engagé et déplaçable dans une fente (62) ou lumière de forme incurvée du rebord périphérique du châssis et qui coopère avec le plateau (42) pour le déplacer en rotation lors du déplacement du doigt dans la fente.

7. Dispositif selon l'une des revendications précédentes, **caractérisé en ce que** les moyens de support (40) sont équipés de roulettes (50) pour autoriser le déplacement du dispositif.

8. Dispositif selon l'une des revendications précédentes, **caractérisé en ce que** les moyens de support (40) comprennent une plaque (68) de support d'au moins un réservoir (70) de produit, tel qu'un émulsifiant, qui est relié à la rampe de distribution (80), et d'une pompe (72) reliée à la rampe de récupération (100).

9. Dispositif selon la revendication 8, **caractérisé en ce que** la rampe de distribution (80) est reliée par une vanne trois voies (86) au réservoir (70) de produit et à des moyens d'alimentation en eau tels qu'un réseau (88) de distribution d'eau.

10. Dispositif selon l'une des revendications précédentes, **caractérisé en ce que** la rampe de récupération (100) est sensiblement rectiligne et porte des tubes souples (102) d'aspiration qui sont espacés les uns des autres et comprennent chacun une extrémité libre destinée à être logée dans une cavité interne de la pièce (32).

11. Dispositif selon l'une des revendications précédentes, **caractérisé en ce que** la rampe de distribution (80) est sensiblement rectiligne et porte au moins deux séries de buses (82) de pulvérisation, les buses de chaque série étant espacées les unes des autres et situées dans un plan sensiblement vertical qui est décalé angulairement du plan de la ou de chaque autre série de buses.

12. Procédé de pulvérisation d'au moins un produit, en particulier de ressuage, dans au moins une cavité interne d'une pièce (32), en particulier de turbomachine, au moyen du dispositif (30) selon l'une des revendications précédentes, **caractérisé en ce qu'**il comprend les étapes consistant à :
a) monter la pièce sur les moyens de support (40) de sorte que le ou l'un des axes de révolution de la pièce s'étende sensiblement verticalement,
b) incliner la pièce par l'intermédiaire des moyens de basculement (54),
c) mettre la pièce en rotation autour de l'axe de révolution précité,
d) pulvériser un produit, tel qu'un émulsifiant, dans la ou chaque cavité interne de la pièce et aspirer le produit pulvérisé du ou de chaque cavité.

13. Procédé selon la revendication 12, **caractérisé en ce qu'**il comprend, après l'étape d), une étape de pulvérisation d'eau dans au moins une cavité interne de la pièce, et d'aspiration de l'eau pulvérisée du ou de chaque cavité.

14. Procédé selon la revendication 12 ou 13, **caractérisé en ce que** la pièce est un tambour de turbomachine.

15. Procédé selon l'une des revendications 12 à 14, **caractérisé en ce que** la pièce est mise en rotation de manière automatisée ou par un opérateur par l'intermédiaire de moyens manuels ou motorisés.

16. Procédé selon l'une des revendications 12 à 15, **caractérisé en ce que** la durée de pulvérisation du produit et/ou de l'eau est prédéterminée.

## Patentansprüche

1. Vorrichtung (30) zum Aufsprühen mindestens eines Mittels, insbesondere eines Eindringmittels, in mindestens einen inneren Hohlraum (36) eines Bauteils (32), insbesondere eines Turbomaschinenbauteils, welche folgendes umfasst:
- Mittel zum Tragen des Bauteils (40)
- mindestens eine Verteilungsrampe für das Sprühmittel (80), die mit Beschickungsmitteln (70) und Mitteln (82) zum Aufsprühen des Eindringmittels verbunden ist, wobei die Rampe mindestens zum Teil dazu bestimmt ist, im Bauteil aufgenommen zu werden, wenn es auf die Trägermittel montiert ist, so dass das Sprühmittel in den bzw. jeden inneren Hohlraum des Teils gesprüht werden kann, und
- mindestens eine Rampe (100) zum Rückleiten des Sprühmittels, die dazu bestimmt ist, mindestens zum Teil im Bauteil aufgenommen zu werden, wenn es auf die Trägermittel montiert ist, und die verbunden ist mit Mitteln zum Absaugen (102) des Sprühmittels aus dem bzw. jedem inneren Hohlraum des Bauteils, sowie mit Vorrichtungen zur Ableitung (72) des abgesaugten Sprühmittels, wobei die Vorrichtung **dadurch gekennzeichnet ist, dass** sie ferner folgendes umfasst:
- Mittel zum Kippen (54) von mindestens einem Teil der Trägermittel von einer im Wesentlichen horizontalen Position aus in eine geneigte Position, wobei das Bauteil so weit geneigt wird, dass das Sprühmittel durch Schwerkraft in den bzw. jeden Hohlraum bis zu mindestens einem Bereich (106) läuft, in dem es durch die Saugmittel abgesaugt wird.

2. Vorrichtung nach Anspruch 1, **dadurch gekennzeichnet, dass** die Trägermittel (40) Zentriermittel und Mittel zur Führung (64, 66) des Bauteils (32) in der Drehung um eine Achse aufweisen, die vorzugsweise eine Drehachse des Bauteils ist.

3. Vorrichtung nach Anspruch 2, **dadurch gekennzeichnet, dass** die Zentrier- und Führungsmittel eine erste Reihe von Walzen (64) enthalten, die sich jeweils frei um eine im Wesentlichen senkrecht zur Drehachse des Bauteils stehenden Achse drehen, und eine zweite Reihe von Walzen (66), die sich jeweils frei um eine im Wesentlichen parallel zur Drehachse des Bauteils verlaufende Achse drehen.

4. Vorrichtung nach einem der vorhergehenden Ansprüche, **dadurch gekennzeichnet, dass** die Trägermittel (40) eine im Wesentlichen quaderförmige Platte (42) aufweisen, die auf ein Gestell (46) montiert und mit diesem Gestell über Schwenkmittel (52) verbunden ist, die das drehbare Verschieben der Platte in Bezug auf das Gestell um eine im Wesentlichen horizontale, parallel zu einer der Seiten der Platte verlaufende Achse ermöglicht.

5. Vorrichtung nach Anspruch 4, **dadurch gekennzeichnet, dass** das Gestell (46) einen im Wesentlichen senkrechten, umgebenden Rand (48) an mindestens einem Teil der Platte (42) aufweist.

6. Vorrichtung nach Anspruch 5, **dadurch gekennzeichnet, dass** die Kippmittel einen im Wesentlichen L-förmigen Hebel (54) aufweisen, der einen ersten im Wesentlichen geradlinigen Teil aufweist, der mit einem zweiten geradlinigen Teil verbunden ist, wobei der erste Teil Greifmittel (58) umfasst und der Verbindungsbereich zwischen dem ersten und dem zweiten Teil mit dem Gestell (46) um eine im Wesentlichen waagrechte Achse (56) herum gelenkig verbunden ist, und der zweite Teil, der einen Stift (60) aufweist, der in einen gebogenen Schlitz (62) oder eine gebogene Öffnung des umlaufenden Rands des Gestells eingeführt wird und darin verschiebbar ist, mit der Platte (42) zusammenwirkt, um sie bei der Bewegung des Stiftes im Schlitz drehend zu verschieben.

7. Vorrichtung nach einem der vorhergehenden Ansprüche, **dadurch gekennzeichnet, dass** die Trägermittel (40) ausgestattet sind mit Rollen (50), um das Verschieben der Vorrichtung zu ermöglichen.

8. Vorrichtung nach einem der vorhergehenden Ansprüche, **dadurch gekennzeichnet, dass** die Trägermittel (40) eine Trägerplatte (68) für mindestens einen Behälter (70) eines Produkts, wie zum Beispiel eines Emulgators, umfassen, die mit der Verteilungsrampe (80) verbunden ist, und eine Pumpe (72), die mit der Rücklauframpe (100) verbunden ist.

9. Vorrichtung nach Anspruch 8, **dadurch gekennzeichnet, dass** die Verteilungsrampe (80) über ein Dreiwegeventil (86) mit dem Produktbehälter (70) und mit Wasserversorgungsmitteln, wie zum Beispiel einem Wasserversorgungsnetz (88), verbunden ist.

10. Vorrichtung nach einem der vorhergehenden Ansprüche, **dadurch gekennzeichnet, dass** die Rücklauframpe (100) im Wesentlichen geradlinig ist und Saugschläuche (102) enthält, die in einem bestimmten Abstand zueinander stehen und jeweils ein freies Ende aufweisen, das dazu bestimmt ist, in einem inneren Hohlraum des Bauteils (32) aufgenommen zu werden.

11. Vorrichtung nach einem der vorhergehenden Ansprüche, **dadurch gekennzeichnet, dass** die Verteilungsrampe (80) im Wesentlichen geradlinig ist und mindestens zwei Reihen Sprühdüsen (82) aufweist, wobei die Düsen jeder Reihe in einem bestimmten Abstand zueinander auf einer im Wesentlichen senkrechten Ebene stehen, die zur Ebene der bzw. jeder anderen Düsenreihe winklig versetzt angeordnet ist.

12. Verfahren zum Sprühen mindestens eines Mittels, insbesondere eines Eindringmittels, in mindestens einen inneren Hohlraum eines Bauteils (32), insbesondere eines Turbomaschinenbauteils, mit Hilfe einer Vorrichtung (30) nach einem der vorhergehenden Ansprüche, **dadurch gekennzeichnet, dass** es Phasen umfasst, die darin bestehen:
a) das Teil auf die Trägermittel (40) zu montieren, so dass die bzw. eine der Drehachsen des Teils sich im Wesentlichen senkrecht erstreckt,
b) das Teil mithilfe der Kippmittel (54) zu neigen,
c) das Teil um die vorgenannte Achse zu drehen,
d) ein Mittel, wie zum Beispiel einen Emulgator, in den bzw. jeden inneren Hohlraum des Teils zu sprühen und das aufgesprühte Mittel aus dem bzw. jedem Hohlraum abzusaugen.

13. Verfahren nach Anspruch 12, **dadurch gekennzeichnet, dass** es nach Phase d) eine Phase des Sprühens von Wasser in mindestens einen der inneren Hohlräume des Bauteils umfasst und die Absaugung des aufgesprühten Wassers aus dem bzw. jedem Hohlraum.

14. Verfahren nach Anspruch 12 oder 13, **dadurch gekennzeichnet, dass** das Bauteil eine Turbomaschinentrommel ist.

15. Verfahren nach einem der Ansprüche 12 bis 14, **dadurch gekennzeichnet, dass** das Teil automatisch oder durch einen Bediener mittels eines manuellen oder motorbetriebenen Mittels gedreht wird.

16. Verfahren nach einem der Ansprüche 12 bis 15, **dadurch gekennzeichnet, dass** die Sprühdauer für das Mittel und/oder Wasser vorher festgelegt wurde.

## Claims

1. A device (30) for spraying at least one liquid, in particular for use in dye penetration inspection, into at least one inner cavity (36) of a workpiece (32), in particular a turbine engine part, the device comprising:
• support means (40) for supporting the workpiece;
• at least one liquid delivery manifold (80) that is connected to liquid feed means (70) and to spray means (82) for spraying the liquid, at least part of the manifold being for receiving inside the workpiece when the workpiece is in position mounted on the support means so as to enable the liquid to be sprayed into the or each inner cavity of the workpiece; and
• at least one recovery manifold (100) for recovering the sprayed liquid, which manifold is for receiving at least in part inside the workpiece when the workpiece is in position mounted on the support means, and is connected to suction means (102) for sucking up the liquid sprayed into the or each inner cavity of the workpiece, and to discharge means (72) for discharging the sucked-up liquid,
the device being **characterized in that** it further comprises
• tilting means (54) for tilting at least a portion of the support means from a substantially horizontal position to an inclined position in which the workpiece is to be inclined so that the sprayed liquid in the or each cavity flows under gravity to at least one zone (106) from which it is sucked up by the suction means.

2. A device according to claim 1, **characterized in that** the support means (40) comprise centering and guide means (64, 66) for guiding the workpiece (32) in rotation about an axis that is preferably an axis of revolution of the workpiece.

3. A device according to claim 2, **characterized in that** the centering and guide means comprise a first series of rollers (64), each free to rotate about an axis that is substantially perpendicular to the axis of rotation of the workpiece, and a second series of rollers (66), each free to rotate about an axis substantially parallel to the axis of rotation of the workpiece.

4. A device according to any preceding claim, **characterized in that** the support means (40) comprise a tray (42) of substantially rectangular shape that is mounted on a frame (46) and that is connected to the frame by pivot means (52) enabling the tray to be pivoted relative to the frame about a substantially horizontal axis extending parallel to one of the sides of the tray.

5. A device according to claim 4, **characterized in that** the frame (46) has a substantially vertical peripheral rim (48) extending around at least a fraction of the tray (42).

6. A device according to claim 5, **characterized in that** the tilting means comprise a substantially L-shaped lever (54) comprising a first substantially rectilinear portion connected to a second substantially rectilinear portion, the first portion carrying handle means (58), the junction zone between the first and second portions being hinged to the frame (46) about a substantially horizontal axis (56), and the second portion carrying a finger (60) that is engaged in and movable along a slot (62) of curved shape in the peripheral rim of the frame and that co-operates with the tray (42) to cause it to pivot when the finger moves along the slot.

7. A device according to any preceding claim, **characterized in that** the support means (40) are fitted with castors (50) to enable the device to be moved.

8. A device according to any preceding claim, **characterized in that** the support means (40) include a support plate (68) for supporting at least one tank (70) of liquid, such as an emulsifier, which tank is connected to the delivery manifold (80), and a pump (72) connected to the recovery manifold (100).

9. A device according to claim 8, **characterized in that** the delivery manifold (80) is connected by a three-port valve (86) to the tank (70) for liquid and to water feed means such as a water supply network (88).

10. A device according to any preceding claim, **characterized in that** the recovery manifold (100) is substantially rectilinear and carries flexible suction tubes (102) that are spaced apart from one another, each having a free end that is to be received in an inner cavity of the workpiece (32).

11. A device according to any preceding claim, **characterized in that** the delivery manifold (80) is substantially rectilinear and carries at least two series of spray nozzles (82), the nozzles in each series being spaced apart from one another and being situated in a plane that is substantially vertical and that is angularly offset from the plane of the or each other series of nozzles.

12. A method of spraying at least one liquid, in particular for use in dye penetration inspection, into at least one inner cavity of a workpiece (32), in particular a turbine engine part, by using a device (30) according to any preceding claim, the method being **characterized in that** it comprises the steps consisting in:
a) mounting the workpiece on the support means (40) so that the or one of the axes of revolution of the workpiece extends substantially vertically;
b) inclining the workpiece by means of the tilting means (54);
c) causing the workpiece to rotate about the above-specified axis of revolution;
d) spraying the liquid, such as an emulsifier, into the or each inner cavity of the workpiece and sucking up the sprayed liquid from the or each cavity.

13. A method according to claim 12, **characterized in that** it includes, after step d), a step of spraying water into the at least one inner cavity of the workpiece and of sucking up the sprayed water from the or each cavity.

14. A method according to claim 12 or claim 13, **characterized in that** the workpiece is a turbine engine drum.

15. A method according to any one of claims 12 to 14, **characterized in that** the workpiece is set into rotation automatically or by an operator using means that may be manual or motor-driven.

16. A method according to any one of claims 12 to 15, **characterized in that** the duration for spraying the liquid and/or water is predetermined.
